# EUROPÄISCHE PATENTSCHRIFT

(11) **EP 2 006 979 B1**
(45) Veröffentlichungstag und Bekanntmachung des Hinweises auf die Patenterteilung: **26.01.2011**
(21) Anmeldenummer: 08009765.2
(22) Anmeldetag: 29.05.2008
(51) Int. Cl.: H02K 7/00, H02K 15/00

(54) **Verfahren zum Herstellen einer Rotorwelle elektrischer Generatoren für die Stromgewinnung in Kraftwerken**
Method for manufacturing an electric generator rotor shaft for generating electricity in power plants
Procédé de fabrication d'un arbre de rotor pour générateurs électriques utilisé à produire du courant dans des centrales électriques

(30) Priorität: 22.06.2007 DE 102007028937
(43) Veröffentlichungstag der Anmeldung: 24.12.2008
(73) Patentinhaber: Sensoplan Aktiengesellschaft, 79801 Hohentengen (DE)
(72) Erfinder: Ebi, Guenter, Dr., 79801 Hohentengen (DE)
(74) Vertreter: Goy, Wolfgang

(56) Entgegenhaltungen:
- JP-A- 5 112 847
- US-A- 5 729 886
- US-A1- 2003 098 627

## Beschreibung

Die Erfindung betrifft ein Verfahren zum Herstellen einer Rotorwelle für elektrische Generatoren für die Stromgewinnung in Kraftwerken.

Elektrische Generatoren für die Stromgewinnung in Kraftwerken weisen eine Rotorwelle auf. Diese besitzt einen mittleren Rotorballen zur Aufnahme der Wicklung. An diesen Rotorballen schließt sich endseitig jeweils ein koaxiales Wellenende an. Diese besitzen einen geringeren Durchmesser als der Durchmesser des Rotorballens. Die Wellenenden sind außerdem mit Lagern, Schleifringen, Ventilatoren sowie auf der sogenannten Erregerseite mit Zentral- sowie Querbohrungen ausgestattet.

Derartige Rotorwellen für Generatoren in Kraftwerken sind komplexe, schwere und damit auch teure Komponenten in Form von geschmiedeten Metallstücken. Das Gewicht liegt je nach Leistungsgröße der Generatorgruppe zwischen 40 und 90 t. Entsprechend teuer sind diese Rotorwellen. Sie machen bis zu 40 % der Gesamtkosten des elektrischen Generators aus.

Ein Problem beim Betrieb von Kraftwerken sind Stillstandszeiten beispielsweise bei defekten elektrischen Generatoren. Dabei sind nicht so sehr die Rotorwellen an sich anfällig, sondern insbesondere die Wicklungen. Die Betreiber von Kraftwerken legen sich daher zur Verhinderung langer Stillstandszeiten bei unerwarteten Schäden Reservekomponenten auf Lager. Dies gilt insbesondere auch für die Rotorwellen der elektrischen Generatoren. Bevorzugt wird dies bei Generatoren älterer Lebensdauer getan oder wenn mehrere Generatoren ein- und derselben Baugröße betrieben werden. In diesem Fall liegt bei einem Defekt des elektrischen Generators die Rotorwelle bereits bereit und muß nur noch mit einer Wicklung versehen werden. Diese Lagerhaltung ist jedoch sehr kostenaufwendig.

Die US 5 729 886 offenbart eine Lichtmaschine mit einer funktionstüchtigen Rotorwelle. Das Wellenende dieser Rotorwelle kann gekürzt werden, um den Rotor in einer modifizierten Lichtmaschine weiterverwenden zu können.

Die JP 05 112 847 zeigt eine Rotorwelle für elektrische Generatoren. Die Rotorwelle besteht aus einem mittleren Rotorballen sowie aus zwei koaxialen Wellenenden geringeren Durchmessers.

Der Erfindung liegt die Aufgabe zugrunde, ein Verfahren zu schaffen, mit dem auf schnelle und kostengünstige Weise Rotorwellen für elektrische Generatoren für die Stromgewinnung in Kraftwerken hergestellt und bereitgestellt werden können.

Die technische Lösung ist gekennzeichnet durch die Merkmale des Anspruchs 1.

Dadurch ist eine Möglichkeit geschaffen, um die Kosten von benötigten Rotorwellen zu reduzieren. Dies gilt insbesondere für diejenigen Anwendungsfälle, bei denen der Hersteller mit dem gleichen Rotorwellentyp ein größeres Leistungsspektrum, z. B. 500 MW bis 800 MW abdeckt und hierfür immer den gleichen Durchmesser des Rotorballens verwendet. Die Leistung des Generators wird dort über die Länge des Rotorballens und den Aufbau der Rotorwicklung angepaßt. Ist eine solche Rotorwelle verfügbar, weil sie beispielsweise ausgemustert worden ist und noch in gutem Zustand ist oder wurde eine Rotorwelle für eine höhere Generatorleistung gebaut als diese für die aktuell benötigte Rotorwelle notwendig ist, kann die bereits vorhandene Rotorwelle problemlos umgebaut werden. Dabei spart man insbesondere die Kosten für das Schmiedestück, welches einen Großteil der Gesamtkosten ausmacht. Die Grundidee des erfindungsgemäßen Verfahrens hinsichtlich der technischen Umsetzung besteht dabei darin, daß von einer vorhandenen, funktionstüchtigen und fertigen Rotorwelle mit größerer Länge des Rotorballens ausgegangen wird. Auf dieser Basis wird dann der Umbau vorgenommen. Dieser Umbau sieht vor, daß der Rotorballen an seinem einen Ende durch Materialabtrag auf die gewünschte Länge gekürzt wird. Dabei wird aus dem Material des abzutragenden Rotorballens sowie aus dem Material des - noch vorhandenen - zugeordneten, benachbarten Wellenendes zusätzlich die Kontur des Wellenendes in der ursprünglichen Form entsprechend oder nahezu entsprechend herausgearbeitet. Dies setzt voraus, daß dieses Herausarbeiten der Kontur durch Materialabtrag möglich ist. Das "nahezu entsprechend" ist dahingehend zu verstehen, daß das neu zu schaffende Wellenende eine Soll-Kontur besitzen kann, welche mit der "alten" Rotorwelle nicht erzielbar ist, wenn also der Durchmesser der Rotorwelle an dieser bestimmten Stelle zu gering ist. In diesem Fall behilft man sich durch anschließendes zusätzliches Befestigen von ringähnlichen Elementen, welche die geforderte Soll-Kontur herstellen. Zu guter Letzt muß dann noch die Rotorwelle durch Ablängen auf Maß abgestochen werden. Um mittels des erfindungsgemäßen Verfahrens eine modifizierte Rotorwelle herstellen zu können, muß selbstverständlich die Ausgangs-Rotorwelle mit der Wunsch-Rotorwelle hinsichtlich Ballendurchmesser, Nutschnitt (vergleichbare Durchflutung), Lagerdurchmesser sowie Hauptabmessungen verglichen werden, ob überhaupt ein Umbau möglich ist. Somit kann auf kostengünstige und technisch einfache Weise eine neue Rotorwelle auf der Basis eines vorhandenen Schmiedestücks gefertigt werden. Dies erfolgt statt eines kompletten Neubaus kostengünstiger, energiesparender, effizienter sowie sicherer durch Verwendung bewährter Komponenten.

Gemäß der Weiterbildung in Anspruch 2 wird die Materialentfernung vorzugsweise durch Abdrehen und/oder Abfräsen und/oder Schneiden und/oder Sägen durchgeführt.

Bei einer Rotorwelle für elektrische Generatoren für die Stromgewinnung in Kraftwerken sind die beiden Wellenenden nicht identisch ausgebildet. So ist die sogenannte Erregerseite mit Bohrungen ausgestattet, nämlich mit einer Zentralbohrung sowie mit Querbohrungen. Das andere Wellenende (also ohne diese Bohrungen) ist die sogenannte Turbinenseite. Damit Nachbearbeitungen der Zentral- sowie Querbohrungen wegfallen, schlägt die Weiterbildung gemäß Anspruch 3 vor, daß die Kürzung auf der sogenannten Turbinenseite vorgenommen wird.

Nichtsdestoweniger schlägt die Weiterbildung gemäß Anspruch 4 vor, daß zusätzlich auch auf der sogenannten Erregerseite eine kleine Kürzung durchgeführt werden kann. Dies hängt von der Position der Querschlitze im Rotorballen ab, so daß durch die kleine Kürzung auf der Erregerseite die neu zu schaffende Rotorwelle insgesamt "paßt".

Eine weitere Weiterbildung schlägt gemäß Anspruch 5 vor, daß auf das Ende des bearbeiteten Endes des Wellenendes eine Kupplung befestigt wird. Hier handelt es sich um ein separates, vorzugsweise neues Teil. Der notwendige Kupplungssitz des Wellenendes wurde hierfür entsprechend abgedreht. Die Befestigung der Kupplung kann entweder durch Aufschrumpfen oder alternativ durch Schweißen erfolgen.

Wie zuvor bereits erwähnt, kann der Fall eintreten, daß beim Umbau der Rotorwelle zur Schaffung des einen Wellenendes es an dem entsprechenden Material der ursprünglichen Rotorwelle fehlt, weil der notwendige Materialdurchmesser aufgrund der Ursprungskontur nicht vorhanden ist. Aus diesem Grunde schlägt die Weiterbildung gemäß Anspruch 6 vor, daß in diesen Bereichen ein neugeformtes, separates ringförmiges Element insbesondere durch Aufschrumpfen oder durch Schweißen befestigt wird.

Ein Ausführungsbeispiel eines Verfahrens zum Herstellen einer Rotorwelle für elektrische Generatoren für die Stromgewinnung in Kraftwerken wird nachfolgend anhand der Zeichnungen beschrieben. In diesen zeigt:
- Fig. 1 a bis 1 d: der Ablauf der verschiedenen Verfahrensschritte zur Herstellung einer - neuen - Rotorwelle;
- Fig. 2: einen Schnitt durch den Rotorballen in Fig. 1.

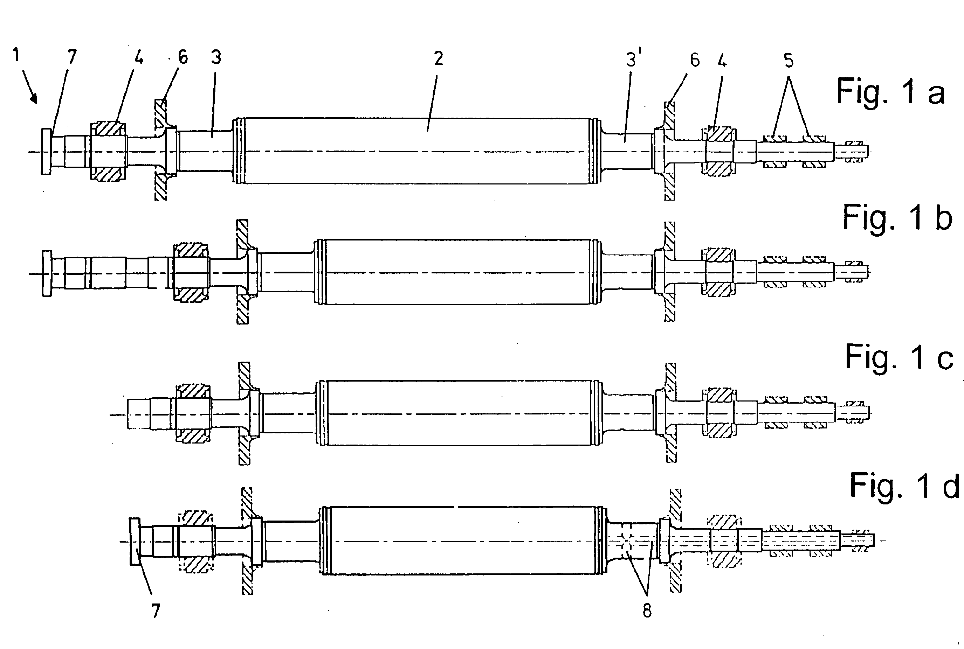

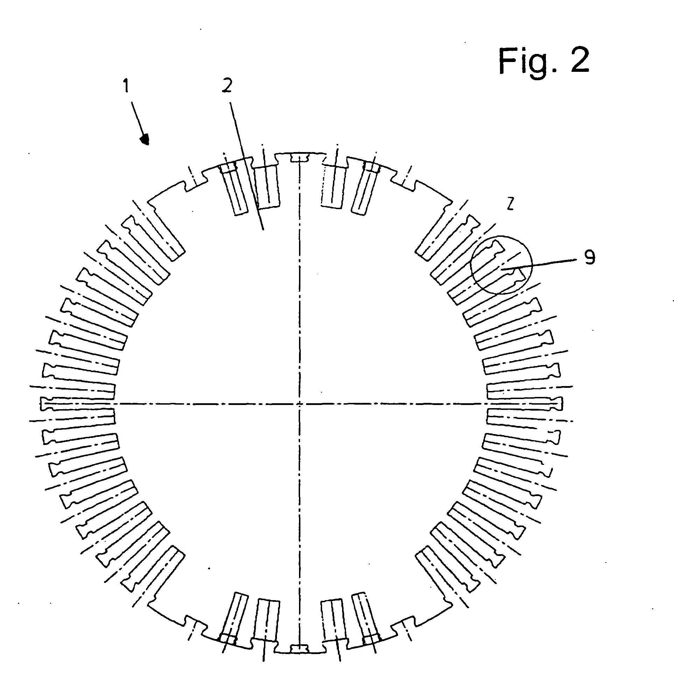

Fig. 1 a zeigt eine Rotorwelle 1 im - funktionsfähigen, fertigen - Ausgangszustand. Sie weist im mittleren Bereich einen Rotorballen 2 auf. Wie in der Querschnittsdarstellung in Fig. 2 erkennbar ist, besitzt dieser Rotorballen 2 Nuten 9 für die - nicht dargestellte - Wicklung des elektrischen Generators.

An den Rotorballen 2 schließen sich an beiden Enden koaxiale Wellenenden 3, 3' an. Dabei definiert das in der Zeichnung linke Wellenende 3 die sogenannten Turbinenseite und das in der Zeichnung rechte Wellenende 3' die sogenannte Erregerseite. Die Wellenenden 3, 3' weisen Lager 4, Schleifringe 5 sowie Ventilatoren 6 auf. Weiterhin weist das Wellenende 3 eine Kupplung 7 und das Wellenende 3' Bohrungen 8, nämlich eine Zentralbohrung sowie eine Querbohrung auf.

Ausgehend von dieser Rotorwelle 1, wie sie in Fig. 1 a dargestellt ist, wird gemäß Fig. 1b die Rotorwelle 1 auf der - in der Zeichnung linken - Turbinenseite umgearbeitet. Dabei wird der Rotorballen 2 durch Abdrehen und/oder Abfräsen gekürzt. Außerdem wird ebenfalls durch Abdrehen und/oder Abfräsen aus dem Material des ursprünglichen Rotorballens 2 und dem Material des zugeordneten Wellenendes 3 die Kontur des ursprünglichen Wellenendes 3 wiederhergestellt, so daß es keinen Unterschied zwischen dem ursprünglichen Wellenende 3 (Fig. 1a) und dem neuen Wellenende 3 (Fig. 1 b) gibt.

Da das neue Wellenende 3 aufgrund der Kürzung des Rotorballens 2 insgesamt dann zu lang ist, wird die überschüssige Länge auf Maß abgestochen (Fig. 1c).

Schließlich muß noch eine neue, separate Kupplung 7 an das freie Ende des Wellenendes 3 angebracht werden. Zu diesem Zweck wird das Ende des Wellenendes 3 entsprechend abgedreht und die neue Kupplung 7 entweder durch Aufschrumpfen oder durch Schweißen befestigt.

Für den Fall, daß an der einen oder anderen Stelle der - ursprünglichen - Rotorwelle 1 zu wenig Material vorhanden ist, um die Ursprungskontur des Wellenendes 3 zu rekonstruieren, können an dieser Stelle ringförmige Elemente aufgeschrumpft oder aufgeschweißt werden.

### Bezugszeichenliste

- 1: Rotorwelle
- 2: Rotorballen
- 3, 3': Wellenenden
- 4: Lager
- 5: Schleifring
- 6: Ventilator
- 7: Kupplung
- 8: Bohrungen
- 9: Nuten

## Patentansprüche

1. Verfahren zum Herstellen einer Rotorwelle (1) für elektrische Generatoren für die Stromgewinnung in Kraftwerken,
wobei von einer an sich funktionstüchtigen, fertigen Rotorwelle (1) aus einem mittleren Rotorballen (2) mit Nuten (9) zur Aufnahme der Wicklung sowie aus zwei koaxialen Wellenenden (3, 3') geringeren Durchmessers ausgegangen wird,
**dadurch gekennzeichnet, dass** zunächst das eine Ende des Rotorballens (2) durch Materialentfernung unter Ausbildung eines kürzeren Rotorballens (2) gekürzt wird und dabei an diesem Ende der Rotorwelle (1) aus dem Material der Rotorwelle (1) das Wellenende (3) entsprechend der ursprünglichen Form des Wellenendes (3) ebenfalls durch Materialentfernung geformt wird und
wobei schließlich der überschüssige Rest der Rotorwelle (1) entfernt wird.

2. Verfahren nach dem vorhergehenden Anspruch,
**dadurch gekennzeichnet,**
**daß** die Materialentfernung durch Abdrehen und/oder Abfräsen und/oder Schneiden und/oder Sägen erfolgt.

3. Verfahren nach einem der vorhergehenden Ansprüche,
**dadurch gekennzeichnet,**
**daß** eine der beiden Wellenenden (3') Bohrungen (8) aufweist, wobei die Materialentfernung auf der Seite der Rotorwelle (1) durchgeführt wird, auf welcher das Wellenende (3) keine Bohrungen (8) aufweist.

4. Verfahren nach Anspruch 3,
**dadurch gekennzeichnet,**
**daß** zusätzlich auf der Seite der Rotorwelle (1), auf welcher das Wellenende (3') Bohrungen (8) aufweist, eine kleine Kürzung des Rotorballens (2) durchgeführt wird.

5. Verfahren nach einem der vorhergehenden Ansprüche,
**dadurch gekennzeichnet,**
**daß** auf das bearbeitete Ende des Wellenendes (3') eine Kupplung (7) befestigt wird.

6. Verfahren nach einem der vorhergehenden Ansprüche,
**dadurch gekennzeichnet,**
**daß** auf dem neu geformten Wellenende (3) separate ringförmige Elemente befestigt werden.

## Claims

1. Method for production of a rotor shaft (1) for electric generators for power generation in power stations, which is based on a functioning finished rotor shaft (1) comprising a central rotor core (2) with grooves (9) to hold the winding and two coaxial shaft ends (3, 3') of smaller diameter, **characterised in that** first the one end of the rotor core (2) is shortened by material removal to form a shorter rotor core (2), and at this end of the rotor shaft (1) the shaft end (3) is formed also by material removal from the material of the rotor shaft (1) corresponding to the original form of the shaft end (3), and wherein finally the surplus remainder of the rotor shaft (1) is removed.

2. Method according to the preceding claim, **characterised in that** the material is removed by turning and/or milling and/or cutting and/or sawing.

3. Method according to any of the preceding claims, **characterised in that** one of the two shaft ends (3') has bores (8), wherein the material is removed on the side of the rotor shaft (1) on which the shaft end (3) has no bores (8).

4. Method according to claim 3, **characterised in that** additionally on the side of the rotor shaft (1) on which the shaft end (3') has bores (8), a small shortening of the rotor core (2) is performed.

5. Method according to any of the preceding claims, **characterised in that** a coupling (7) is attached to the machined end of the shaft end (3').

6. Method according to any of the preceding claims, **characterised in that** separate ring-shaped elements are attached to the newly formed shaft end (3).

## Revendications

1. Procédé de fabrication d'un arbre de rotor (1) pour des générateurs électriques utilisés pour produire du courant dans des centrales électriques,
dans lequel on part d'un arbre de rotor (1) fini, en état de fonctionnement, composé d'un corps de rotor central (2) avec des rainures (9) prévues pour recevoir l'enroulement, ainsi que de deux extrémités de rotor coaxiales (3, 3') de plus petit diamètre, **caractérisé en ce qu'**une extrémité du corps de rotor (2) est d'abord raccourcie par enlèvement de matière de manière à former un corps de rotor (2) plus court et en même temps, à cette extrémité de l'arbre de rotor (1), l'extrémité d'arbre (3) est formée, également par enlèvement de matière, de façon correspondante à la forme initiale de l'extrémité d'arbre (3) à partir de la matière de l'arbre de rotor (1) et
dans lequel le reste en excédent de l'arbre de rotor (1) est finalement enlevé.

2. Procédé selon la revendication précédente,
**caractérisé en ce**
**que** l'enlèvement de matière est réalisé par tournage et/ou fraisage et/ou coupe et/ou sciage.

3. Procédé selon une des revendications précédentes,
**caractérisé en ce**
**qu'**une des deux extrémités d'arbre (3') présente des perçages (8), l'enlèvement de matière étant réalisé du côté de l'arbre de rotor (1) sur lequel l'extrémité d'arbre (3) ne présente pas de perçages (8).

4. Procédé selon la revendication 3,
**caractérisé en ce**
**qu'**un petit raccourcissement du corps de rotor (2) est réalisé en plus du côté de l'arbre de rotor (1) sur lequel l'extrémité d'arbre (3') présente des perçages (8).

5. Procédé selon une des revendications précédentes,
**caractérisé en ce**
**qu'**un accouplement (7) est fixé sur l'extrémité usinée de l'extrémité d'arbre (3').

6. Procédé selon une des revendications précédentes,
**caractérisé en ce**
**que** des éléments annulaires séparés sont fixés sur l'extrémité d'arbre (3) nouvellement formée.
